# EUROPÄISCHE PATENTANMELDUNG

(11) **EP 2 743 542 A2**
(43) Veröffentlichungstag der Anmeldung: **18.06.2014**
(21) Anmeldenummer: 13196671.5
(22) Anmeldetag: 11.12.2013
(51) Int. Cl.: F16F 15/139, F16F 15/14

(54) **Kupplungseinrichtungen**

(30) Priorität: 14.12.2012 DE 102012223253
(71) Anmelder: Schaeffler Technologies GmbH & Co. KG, 91074 Herzogenaurach (DE)
(72) Erfinder: Maienschein, Stephan, 76534 Baden-Baden (DE); Krause, Thorsten, 77815 Bühl (DE)

(57) **Zusammenfassung**

Die vorliegende Erfindung betrifft nasslaufende Kupplungseinrichtungen mit einem Gehäuse zur Aufnahme einer Flüssigkeit, wobei das Gehäuse mit einem Antriebsorgan verbunden ist, zumindest umfassend eine mit dem Gehäuse zur Drehung um eine Drehachse gekoppelte erste Reibflächenanordnung, eine mit der ersten Reibflächenanordnung in Reibeingriff bringbare zweite Reibflächenanordnung, die mit einem Abtriebsorgan zur Drehung um die Drehachse gekoppelt ist, einen um die Drehachse drehbaren Ausgleichsmassenträger als erste Dämpferanordnung, der wenigstens eine Auslenkungsmasse derart trägt, dass eine radiale Lage der wenigstens einen Auslenkungsmasse bezüglich der Drehachse veränderbar ist.

Die hier gezeigten Kupplungseinrichtungen ermöglichen die Kombinationen von Dämpferanordnungen mit Dämpferelementen und Dämpferanordnungen in Form von Fliehkraftpendeln.

## Beschreibung

Die vorliegende Erfindung betrifft eine nasslaufende Kupplungseinrichtung mit einem Gehäuse zur Aufnahme einer Flüssigkeit. Es handelt sich hierbei insbesondere um eine Anfahrkupplung für Kraftfahrzeuge zur Übertragung von Drehmomenten zwischen einer Kraftmaschine und einem Getriebe und/oder einem Antriebsstrang.

Derartige Kupplungseinrichtungen werden als Komponenten eines Antriebsstrangs von Kraftfahrzeugen verwendet und dort z. B. zur Kopplung und Übertragung von Drehmomenten der Kraftmaschine mit dem Getriebe des Kraftfahrzeuges eingesetzt. Eine in einem Gehäuse der Kupplungseinrichtung angeordnete Dämpferanordnung dämpft mit Hilfe einer Dämpferelementanordnung - in der Regel kommen hier Dämpferfedern zum Einsatz - Drehschwingungen, die durch die Kraftmaschine, das Getriebe oder weitere Komponenten des Antriebsstrangs hervorgerufen werden. Eine derartige Dämpferanordnung dämpft einen bestimmten Drehschwingungsfrequenzbereich besonders gut, der in Abhängigkeit von den Federhärten der Dämpfungsanordnung eingestellt werden kann.

Zur Dämpfung von Drehschwingungen werden auch Dämpferanordnungen verwendet, deren Wirkung auf wenigstens einer Auslenkungsmasse beruht, die ihre radiale Lage bezüglich einer Drehachse verändern kann. Im Gegensatz zu einer auf elastischen Dämpferelementen beruhenden Dämpferanordnung ist der von einer derartigen Dämpferanordnung (mit Auslenkungsmasse) gedämpfte Drehschwingungsfrequenzbereich drehzahlabhängig. Damit ist diese Dämpferanordnung (mit Auslenkungsmasse) besonders geeignet, Drehschwingungen zu dämpfen, die auf einer bestimmten Anregungsordnung des Motors beruhen, deren Drehschwingungsfrequenzen also mit steigender Drehzahl ansteigen. Insbesondere werden derartige Dämpferanordnungen (im Folgenden insbesondere als erste Dämpferanordnung bezeichnet) auch als Fliehkraftpendel bezeichnet.

Aufgabe der vorliegenden Erfindung ist es, nasslaufende Kupplungseinrichtungen bereitzustellen, die eine verbesserte Funktionalität der zur Schwingungsdämpfung beitragenden Baugruppen gewährleisten können. Es sollen verschiedene Bauformen von Kupplungseinrichtungen vorgeschlagen werden, die jeweils eine besondere Eignung für spezifische Anwendungsfälle aufweisen.

Diese Aufgabe wird durch Kupplungseinrichtungen mit den Merkmalen gemäß der unabhängigen Patentansprüche 1, 5 und 8 gelöst. Vorteilhafte Weiterbildungen sind Gegenstand der abhängigen Patentansprüche.

Die Erfindung betrifft eine nasslaufende erste Kupplungseinrichtung mit einem Gehäuse zur Aufnahme einer Flüssigkeit (eine hydraulische Flüssigkeit, insbesondere ein Öl, es sind aber auch Fette einsetzbar), wobei das Gehäuse mit einem Antriebsorgan verbunden ist, zumindest umfassend:
- eine mit dem Gehäuse zur Drehung um eine Drehachse gekoppelte erste Reibflächenanordnung,
- eine mit der ersten Reibflächenanordnung in Reibeingriff bringbare zweite Reibflächenanordnung, die mit einem Abtriebsorgan zur Drehung um die Drehachse gekoppelt ist,
- einen um die Drehachse drehbaren Ausgleichsmassenträger als erste Dämpferanordnung, der wenigstens eine Auslenkungsmasse derart trägt, dass eine radiale Lage der wenigstens einen Auslenkungsmasse bezüglich der Drehachse veränderbar ist.

Das Gehäuse ist über eine zweite Dämpferanordnung mit der ersten Reibflächenanordnung gekoppelt, wobei die zweite Dämpferanordnung eine mit dem Gehäuse verbundene zweite Primärseite aufweist und eine gegen die Wirkung einer zweiten Dämpferelementanordnung bezüglich der zweiten Primärseite um die Drehachse drehbare und mit der ersten Reibflächenanordnung verbundene zweite Sekundärseite aufweist.

Insbesondere ist die erste Dämpferanordnung an das Abtriebsorgan gekoppelt.

Insbesondere ist die zweite Reibflächenanordnung über eine dritte Dämpferanordnung mit dem Abtriebsorgan gekoppelt, wobei die dritte Dämpferanordnung eine mit der zweiten Reibflächenanordnung verbundene dritte Primärseite aufweist und eine gegen die Wirkung einer dritten Dämpferelementanordnung bezüglich der dritten Primärseite um die Drehachse drehbare und mit dem Abtriebsorgan gekoppelte dritte Sekundärseite aufweist.

Gemäß einer weiteren vorteilhaften Ausgestaltung ist die erste Dämpferanordnung an die dritte Primärseite der dritten Dämpferanordnung oder an das Abtriebsorgan gekoppelt.

Zur Optimierung des von der Kupplungseinrichtung eingenommenen Bauraums können die einzelnen Dämpferanordnungen und Reibflächenanordnungen sich in radialer Richtung radial überlappen und/oder in der axialen Richtung axial überlappen.

Insbesondere kann die erste Dämpferanordnung, mit einer hinsichtlich der radialen Lage veränderbaren Auslenkungsmasse, in der radialen Richtung weiter außen angeordnet sein als die Dämpferelementanordnungen der anderen Dämpferanordnung(-en). Auf diese Weise kann ausreichend Bauraum zur Aufnahme der in der radialen Richtung beweglichen Auslenkungsmassen bereitgestellt werden.

Das Antriebsorgan der Kupplungseinrichtung ist hier insbesondere mit der Kraftmaschine verbunden, so dass ein Drehmoment der Kraftmaschine auf das Antriebsorgan und damit auf die Kupplungseinrichtung übertragen wird.

Bei den hier genannten Reibflächenanordnungen handelt es sich insbesondere um scheibenförmige Reiblamellen, die voneinander beabstandet (Kupplung gelöst) oder aneinander anliegend (Kupplung geschlossen) angeordnet sind. Bei geschlossener Reibflächenanordnung wird ein Drehmoment ausgehend von einer Kraftmaschine über die Kupplung hin zu einem Abtriebsorgan übertragen.

Als Abtriebsorgan ist hier insbesondere ein Teil der Kupplungseinrichtung bezeichnet, das z.B. mit einem Getriebe zur Übertragung von Drehmomenten verbunden ist.

Insbesondere bezeichnet der Begriff "gekoppelt", dass zwei Komponenten der Kupplungseinrichtung miteinander so verbunden sind, dass eine Drehbewegung der einen Komponente auf die andere Komponente übertragen wird, gegebenenfalls unterbrochen z.B. durch eine Dämpferanordnung.

Insbesondere bedeutet hier der Begriff "verbunden", dass Komponenten der Kupplungseinrichtung miteinander drehfest verbunden sind. Insbesondere heißt das, dass gerade keine Dämpferanordnung zwischen diesen Komponenten angeordnet ist, so dass die Drehbewegung der einen Komponente ohne Verzögerung und ohne nennenswerte Dämpfung auf die andere Komponente übertragen wird.

Die unterschiedliche Anordnung der Dämpferanordnungen mit Dämpferelementanordnungen und der ersten Dämpferanordnungen mit einer Auslenkungsmasse, die hinsichtlich ihrer radialen Lage veränderbar ist, kann im Rahmen der vorgeschlagenen ersten und im Rahmen der im Folgenden vorgeschlagenen zweiten und dritten Kupplungseinrichtung jeweils so gewählt werden, dass unterschiedliche Dämpfungswirkungen je nach Einsatzfall realisiert werden können. So können bestimmte kritische Schwingungsordnungen, z.B. von der Kraftmaschine oder auch von dem Getriebe bzw. dem Antriebsstrang, in der Kupplungseinrichtung gedämpft werden und somit die Übertragung dieser Schwingungsordnung auf vor- bzw. nachgelagerte Komponenten dadurch verringert bzw. vermieden werden. Dadurch ergibt sich die Möglichkeit, eine optimale Dämpfungseigenschaft für den jeweiligen Einsatzfall durch die entsprechende Anordnung der Dämpferanordnungen innerhalb der Kupplungseinrichtung zu erreichen und so für alle denkbaren Einsatzfälle eine optimale Ausführungsform einer Kupplungseinrichtung bereitstellen zu können.

Die Aufgabe wird weiterhin gelöst durch eine nasslaufende zweite Kupplungseinrichtung mit einem Gehäuse zur Aufnahme einer Flüssigkeit, wobei das Gehäuse mit einem Antriebsorgan gekoppelt ist, zumindest umfassend:
- eine mit dem Gehäuse zur Drehung um eine Drehachse verbundene erste Reibflächenanordnung,
- eine mit der ersten Reibflächenanordnung in Reibeingriff bringbare zweite Reibflächenanordnung, die mit einem Abtriebsorgan zur Drehung um die Drehachse gekoppelt ist,
- mindestens einen um die Drehachse drehbaren Ausgleichsmassenträger als erste Dämpferanordnung, der wenigstens eine Auslenkungsmasse derart trägt, dass eine radiale Lage der wenigstens einen Auslenkungsmasse bezüglich der Drehachse veränderbar ist.

Das Gehäuse ist über eine vierte Dämpferanordnung mit dem Antriebsorgan gekoppelt, wobei die vierte Dämpferanordnung eine mit dem Antriebsorgan verbundene vierte Primärseite aufweist und eine gegen die Wirkung einer vierten Dämpferelementanordnung bezüglich der vierten Primärseite um die Drehachse drehbare und mit dem Gehäuse verbundene vierte Sekundärseite aufweist.

Insbesondere ist ein Ausgleichsmassenträger an das Antriebsorgan oder an das Gehäuse gekoppelt oder es sind zwei Ausgleichsmassenträger vorgesehen, von denen einer an das Abtriebsorgan und der andere an das Gehäuse gekoppelt ist.

Gemäß einer weiteren vorteilhaften Ausgestaltung ist eine fünfte Dämpferanordnung mit dem Abtriebsorgan verbunden, wobei die fünfte Dämpferanordnung eine mit der zweiten Reibflächenanordnung verbundene fünfte Primärseite aufweist und eine gegen die Wirkung einer fünften Dämpferelementanordnung bezüglich der fünften Primärseite um die Drehachse drehbare und mit dem Abtriebsorgan verbundene fünfte Sekundärseite aufweist.

Die zweite Kupplungseinrichtung zeichnet sich gegenüber der ersten Kupplungseinrichtung nun also dadurch aus, dass eine vierte Dämpferanordnung mit einer Dämpferelementanordnung zwischen Antriebsorgan und Gehäuse angeordnet ist. So können Schwingungsordnungen, die von der Antriebsseite sonst ungedämpft auf das Gehäuse der Kupplungseinrichtung einwirken, bereits gedämpft werden.

Die Aufgaben werden weiter gelöst durch eine nasslaufende dritte Kupplungseinrichtung mit einem Gehäuse zur Aufnahme einer Flüssigkeit, wobei das Gehäuse mit einem Antriebsorgan gekoppelt ist, zumindest umfassend:
- eine mit dem Gehäuse zur Drehung um eine Drehachse verbundene erste Reibflächenanordnung,
- eine mit der ersten Reibflächenanordnung in Reibeingriff bringbare zweite Reibflächenanordnung, die mit einem Abtriebsorgan zur Drehung um die Drehachse gekoppelt ist,
- mindestens einen um die Drehachse drehbaren Ausgleichsmassenträger als erste Dämpferanordnung, der wenigstens eine Auslenkungsmasse derart trägt, dass eine radiale Lage der wenigstens einen Auslenkungsmasse bezüglich der Drehachse veränderbar ist.

Die zweite Reibflächenanordnung ist über eine fünfte Dämpferanordnung mit dem Abtriebsorgan gekoppelt, wobei die fünfte Dämpferanordnung eine mit der zweiten Reibflächenanordnung verbundene fünfte Primärseite aufweist und eine gegen die Wirkung einer fünften Dämpferelementanordnung bezüglich der fünften Primärseite um die Drehachse drehbare und mit dem Abtriebsorgan verbundene fünfte Sekundärseite aufweist und wobei die erste Dämpferanordnung an das Gehäuse gekoppelt ist.

Es wird weiterhin vorgeschlagen, dass die erste, zweite oder dritte Kupplungseinrichtung jeweils zumindest eine erste Dämpferanordnung mit wenigstens einem Ausgleichsmassenträger aufweist, die außerhalb des Gehäuses angeordnet ist.

Weiterhin wird ein Kraftfahrzeug vorgeschlagen mit zumindest einem Antriebsorgan (z.B. einer Kraftmaschine) und einem Abtriebsorgan (z.B. einem Getriebe) sowie einer dazwischen angeordneten erfindungsgemäßen ersten, zweiten oder dritten Kupplungseinrichtung.

Die mit Bezug auf die erste, zweite oder dritte Kupplungseinrichtung gemachten Ausführungen gelten insbesondere auch für die jeweils anderen Kupplungseinrichtungen und umgekehrt. Darüber hinaus sind die in den Patentansprüchen einzeln aufgeführten Merkmale in beliebiger, technologisch sinnvoller Weise auch unter den einzelnen Kupplungseinrichtungen miteinander kombinierbar und können durch erläuternde Sachverhalte aus der Beschreibung ergänzt werden, wobei weitere Ausführungsvarianten der Erfindung aufgezeigt werden.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Insbesondere ist darauf hinzuweisen, dass die Figuren und insbesondere die dargestellten Größenverhältnisse nur schematisch sind. Gleiche Bezugszeichen in den Figuren bezeichnen die gleichen Gegenstände. Es zeigen:
- Fig. 1:: ein Kraftfahrzeug mit einer Kupplungseinrichtung;
- Fig. 2:: eine erste Kupplungseinrichtung in einer Seitenansicht im Schnitt;
- Fig. 3:: eine schematische Darstellung der ersten Kupplungseinrichtung gemäß einer ersten Ausführungsart;
- Fig. 4:: eine Darstellung einer ersten Kupplungseinrichtung gemäß einer zweiten Ausführungsart;
- Fig. 5:: Darstellung einer ersten Kupplungseinrichtung gemäß einer dritten Ausführungsart;
- Fig. 6:: zweite Kupplungseinrichtung in einer Seitenansicht im Schnitt;
- Fig. 7:: zweite Kupplungseinrichtung in einer Seitenansicht mit geschlossenem Gehäuse und einer am Gehäuse angeordneten vierten Dämpferanordnung im Schnitt;
- Fig. 8:: zweite Kupplungseinrichtung in schematischer Darstellung gemäß einer ersten Ausführungsart;
- Fig. 9:: zweite Kupplungseinrichtung in schematischer Darstellung gemäß einer zweiten Ausführungsart;
- Fig. 10:: zweite Kupplungseinrichtung in schematischer Darstellung gemäß einer dritten Ausführungsart;
- Fig. 11:: zweite Kupplungseinrichtung in schematischer Darstellung gemäß einer vierten Ausführungsart;
- Fig. 12:: zweite Kupplungseinrichtung in schematischer Darstellung gemäß einer fünften Ausführungsart;
- Fig. 13:: zweite Kupplungseinrichtung in schematischer Darstellung gemäß einer sechsten Ausführungsart;
- Fig. 14:: zweite Kupplungseinrichtung in schematischer Darstellung gemäß einer siebten Ausführungsart;
- Fig. 15:: zweite Kupplungseinrichtung in schematischer Darstellung gemäß einer achten Ausführungsart;
- Fig. 16:: zweite Kupplungseinrichtung in schematischer Darstellung gemäß einer neunten Ausführungsart;
- Fig. 17:: zweite Kupplungseinrichtung in schematischer Darstellung gemäß einer zehnten Ausführungsart;
- Fig. 18:: zweite Kupplungseinrichtung in schematischer Darstellung gemäß einer elften Ausführungsart;
- Fig. 19:: zweite Kupplungseinrichtung in schematischer Darstellung gemäß einer zwölften Ausführungsart;
- Fig. 20:: zweite Kupplungseinrichtung im Schnitt in einer Seitenansicht gemäß der neunten Ausführungsart (vgl. Fig. 16);
- Fig. 21:: schematische Darstellung der Kupplungseinrichtung gemäß Fig. 20 (vgl. Fig. 16);
- Fig. 22:: dritte Kupplungseinrichtung in einer Seitenansicht im Schnitt;
- Fig. 23:: schematische Darstellung der dritten Kupplungseinrichtung gemäß Fig. 22.

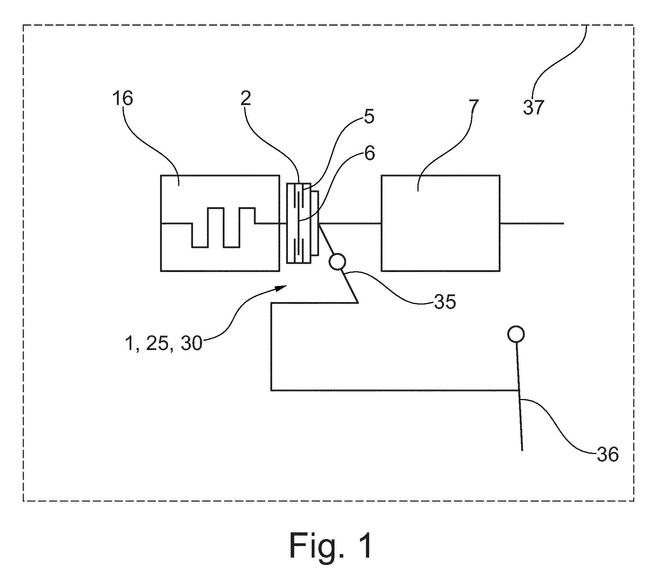

Fig. 1 zeigt ein Kraftfahrzeug 37 mit einem Antriebsorgan 16 (Brennkraftmaschine), einem Abtriebsorgan 7 (Getriebe) und einer dazwischen angeordneten Kupplungseinrichtung 1, 25, 30. Die Kupplungseinrichtung 1, 25, 30 weist ein Gehäuse 2 mit einer ersten Reibflächenanordnung 5 und einer zweiten Reibflächenanordnung 6 auf. Die Kupplungseinrichtung 1, 25, 30 wird über eine Ausrückvorrichtung 35 angesteuert, wobei die Ausrückvorrichtung 35 durch ein Pedal 36 betätigt wird.

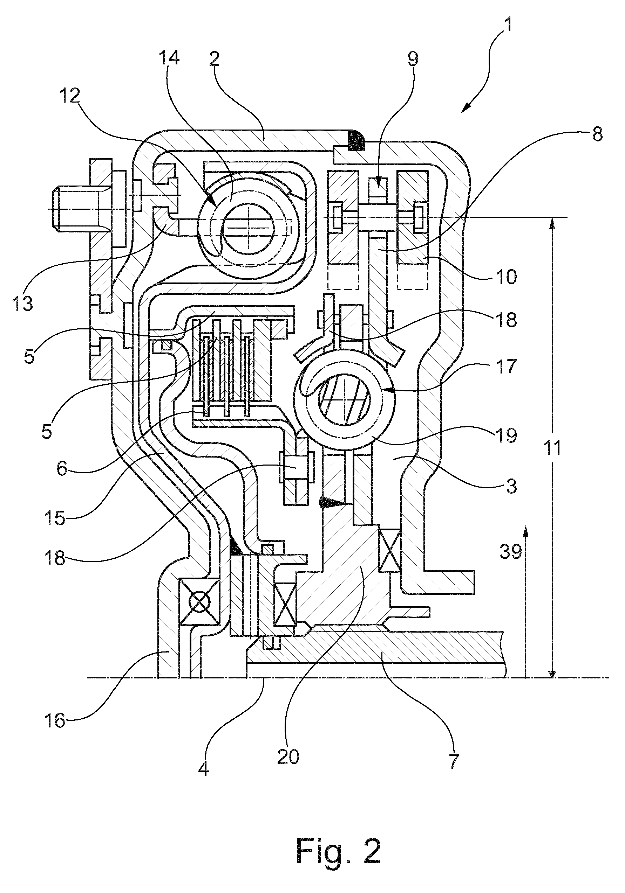

Fig. 2 zeigt eine erste Kupplungseinrichtung 1 in einer Seitenansicht im Schnitt. Hier ist die obere Hälfte der Kupplungseinrichtung 1 oberhalb der Drehachse 4 dargestellt. Das Gehäuse 2 der ersten Kupplungseinrichtung 1 ist als Antriebsorgan 16 ausgeführt, das bedeutet das ein Drehmoment, ausgehend z. B. von einer Kraftmaschine über das Gehäuse 2 in die Kupplungseinrichtung 1 eingeleitet wird. Ausgehend von dem Gehäuse 2 erstreckt sich eine zweite Primärseite 13 zu einer zweiten Dämpferanordnung 12. Zwischen zweiter Primärseite 13 und zweiter Sekundärseite 15 ist eine zweite Dämpferelementanordnung 14 angeordnet. Eine erste Reibflächenanordnung 5 ist mit der zweiten Sekundärseite 15 verbunden. Eine zweite Reibflächenanordnung 6 wirkt mit der ersten Reibflächenanordnung 5 zusammen. Die zweite Reibflächenanordnung 6 ist über eine dritte Primärseite 18 mit einer dritten Dämpferanordnung 17 verbunden. Die dritte Dämpferanordnung 17 weist ebenfalls eine dritte Dämpferelementanordnung 19 auf. Die dritte Primärseite 18 wirkt über die dritte Dämpferelementanordnung 19 auf die dritte Sekundärseite 20 der dritten Dämpferanordnung 17. Die dritte Sekundärseite 20 ist mit dem Abtriebsorgan 7 verbunden.

Weiterhin ist eine erste Dämpferanordnung 9 vorgesehen, die über einen Ausgleichsmassenträger 8 mit der dritten Primärseite 18 der dritten Dämpferanordnung 17 verbunden ist. Die erste Dämpferanordnung 9 weist zwei Auslenkungsmassen 10 auf, die am Ausgleichsmassenträger 8 angeordnet sind, wobei die Auslenkungsmassen 10 hinsichtlich ihrer radialen Lage 11 hin zur Drehachse 4 veränderlich angeordnet sind.

Innerhalb des Gehäuses 2 der ersten Kupplungseinrichtung 1 ist eine Flüssigkeit 3 angeordnet, die ihrerseits Schwingungen der einzelnen Dämpferanordnungen dämpfen kann und darüber hinaus zur Kühlung der Reibflächenanordnung beiträgt.

Hier sind dritte Dämpferanordnung 17 und Reibflächenanordnung 5, 6 sowie zweite Dämpferanordnung 12 und erste Dämpferanordnung 9 jeweils radial überlappend angeordnet. Gleichzeitig sind zweite Dämpferanordnung 12 und Reibflächenanordnung 5, 6 sowie erste Dämpferanordnung 9 und dritte Dämpferanordnung 17 jeweils axial überlappend angeordnet. Somit kann eine platzsparende Anordnung der einzelnen Komponenten innerhalb der Kupplungseinrichtung 1 gewährleistet werden.

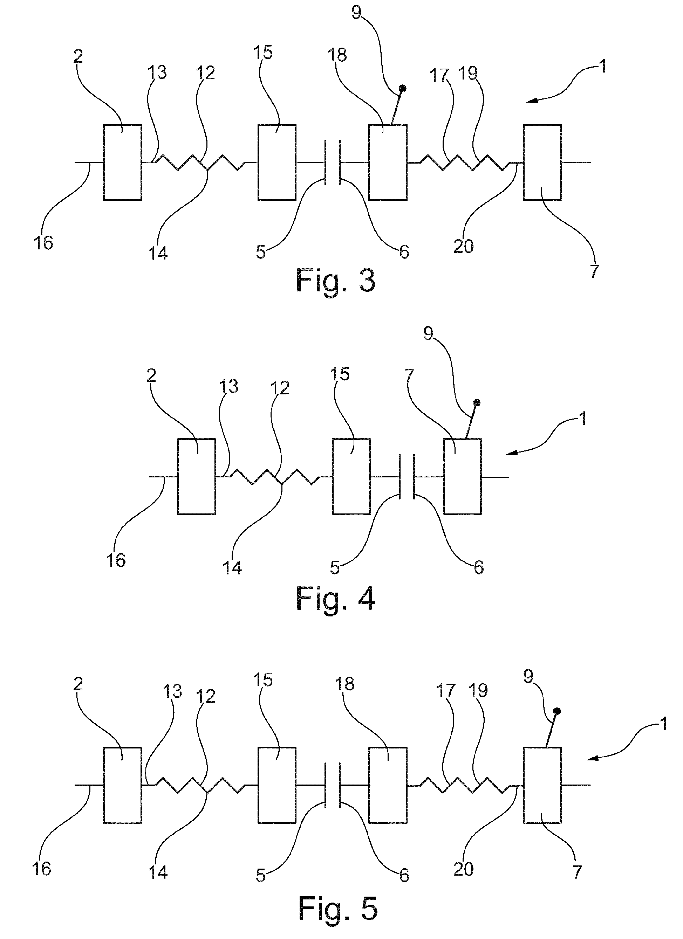

Fig. 3 zeigt die erste Kupplungseinrichtung 1 gemäß Fig. 2 in schematischer Ansicht. Ausgehend von dem Antriebsorgan 16 werden Drehmomente über das Gehäuse 2 auf die zweite Primärseite 13 und von dort auf die zweite Dämpferanordnung 12 mit zweiter Dämpferelementanordnung 14 übertragen. Von dort werden Drehmomente auf die zweite Sekundärseite 15 der zweiten Dämpferanordnung 12 übertragen, die entsprechend mit der ersten Reibflächenanordnung 5 verbunden ist. Bei geschlossener erster Kupplungseinrichtung 1 sind erste Reibflächenanordnung 5 und zweite Reibflächenanordnung 6 drehfest miteinander verbunden, so dass Drehmomente auf die zweite Reibflächenanordnung 6 und von da aus auf die dritte Primärseite 18 der dritten Dämpferanordnung 17 mit dritter Dämpferelementanordnung 19 übertragen werden. An die dritte Primärseite 18 ist die erste Dämpferanordnung 9 angebunden. Ausgehend von der dritten Dämpferanordnung 17 werden Drehmomente auf die dritte Sekundärseite 20 und von dort auf das an die dritte Sekundärseite 20 angebundene Abtriebsorgan 7 übertragen.

Fig. 4 zeigt eine zweite Ausführungsart der ersten Kupplungseinrichtung 1 in schematischer Ansicht. Hier wurde auf die dritte Dämpferanordnung 17 verzichtet, so dass Drehmomente ausgehend von der zweiten Reibflächenanordnung 6 unmittelbar auf das Abtriebsorgan 7 übertragen werden, wobei die erste Dämpferanordnung 9 an das Abtriebsorgan 7 innerhalb des Gehäuses 2 der Kupplungseinrichtung 1 angebunden ist.

Fig. 5 zeigt eine weitere Ausführungsart der ersten Kupplungseinrichtung 1 in schematischer Ansicht, wobei im Unterschied zur Ausführungsart gemäß Fig. 3 hier die erste Dämpferanordnung 9 nicht an die dritte Primärseite 18, sondern an die dritte Sekundärseite 20 bzw. an das mit der dritten Sekundärseite 20 verbundene Abtriebsorgan 7 angebunden ist.

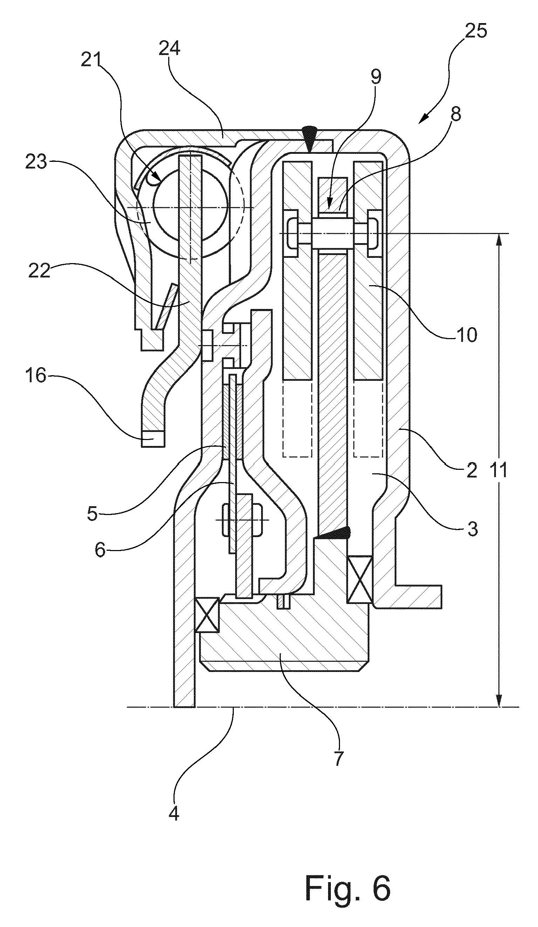

Fig. 6 zeigt eine zweite Kupplungseinrichtung 25 in einer Seitenansicht im Schnitt, wobei hier die obere Hälfte der Kupplungseinrichtung 25 oberhalb der Drehachse 4 gezeigt ist. Ein Drehmoment wird ausgehend von dem Antriebsorgan 16 auf eine vierte Primärseite 22 einer vierten Dämpferanordnung 21 mit einer vierten Dämpferelementanordnung 23 übertragen.

Über die vierte Dämpferelementanordnung 23 wird das Drehmoment auf die vierte Sekundärseite 24 übertragen, die mit dem Gehäuse 2 der zweiten Kupplungseinrichtung 25 verbunden ist. Das Gehäuse 2 ist über eine erste Reibflächenanordnung 5 mit der zweiten Reibflächenanordnung 6 verbunden. Die zweite Reibflächenanordnung 6 ist mit dem Abtriebsorgan 7 verbunden. Weiterhin ist eine erste Dämpferanordnung 9 mit einem Ausgleichsmassenträger 8 und Auslenkungsmassen 10 dargestellt. Der Ausgleichsmassenträger 8 ist mit dem Abtriebsorgan 7 verbunden. Hier ist die Reibflächenanordnung 5, 6 nach radial innen versetzt und die vierte Dämpferanordnung 21 außerhalb des eigentlichen Gehäuses 2 der Kupplungseinrichtung 25 angeordnet. Die vierte Sekundärseite 24 bildet einen Gehäusefortsatz, der die vierte Dämpferanordnung 21 außerhalb des eigentlichen Gehäuses 2 einschließt. Die vierte Sekundärseite 24 bildet somit einen die vierte Dämpferanordnung 21 umschließenden Raum, der gegebenenfalls mit Fett oder einer Flüssigkeit (Öl) gefüllt sein kann. Aufgrund der Anordnung der vierten Dämpferanordnung 21 außerhalb des Gehäuses 2 und der radial innen angeordneten Reibflächenanordnung 5, 6 kann hier sowohl in radialer Richtung 39 als auch in der axialen Richtung parallel zur Drehachse 4 eine sehr kompakte zweite Kupplungseinrichtung 25 bereitgestellt werden. Weiterhin wird so ausreichend Bauraum bereitgestellt für die Auslenkungsmassen 10 der ersten Dämpferanordnung 9.

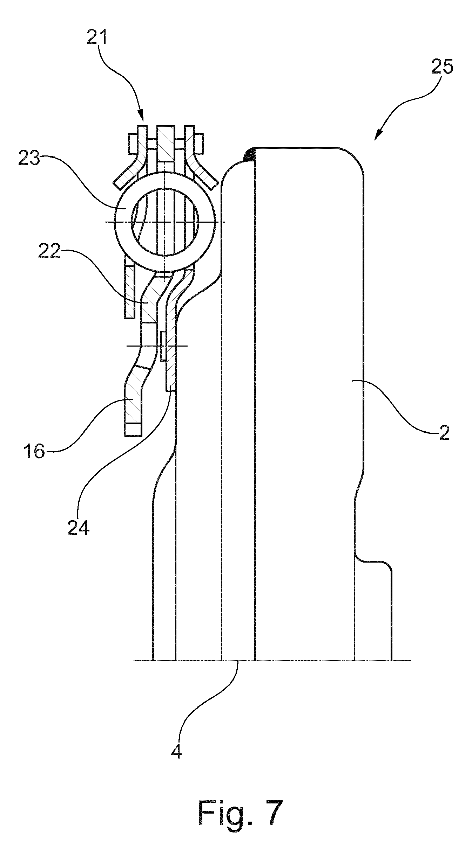

Fig. 7 zeigt die zweite Kupplungseinrichtung 25 gemäß Fig. 6 in einer Seitenansicht, wobei nur die vierte Dämpferanordnung 21 im Schnitt dargestellt ist. Erkennbar ist das schmal ausgeführte Gehäuse, das sich in der axialen Richtung entlang der Drehachse 4 erstreckt, wobei hier die vierte Dämpferanordnung 21 über eine vierte Sekundärseite 24 am Gehäuse 2 angeordnet ist. In diesem Ausführungsbeispiel bildet die vierte Sekundärseite 24 keinen Gehäusefortsatz. Über ein Antriebsorgan 16 und eine vierte Primärseite 22 wird also ein Drehmoment über die vierte Dämpferelementanordnung 23 auf die vierte Sekundärseite 24 und entsprechend auf das Gehäuse 2 übertragen.

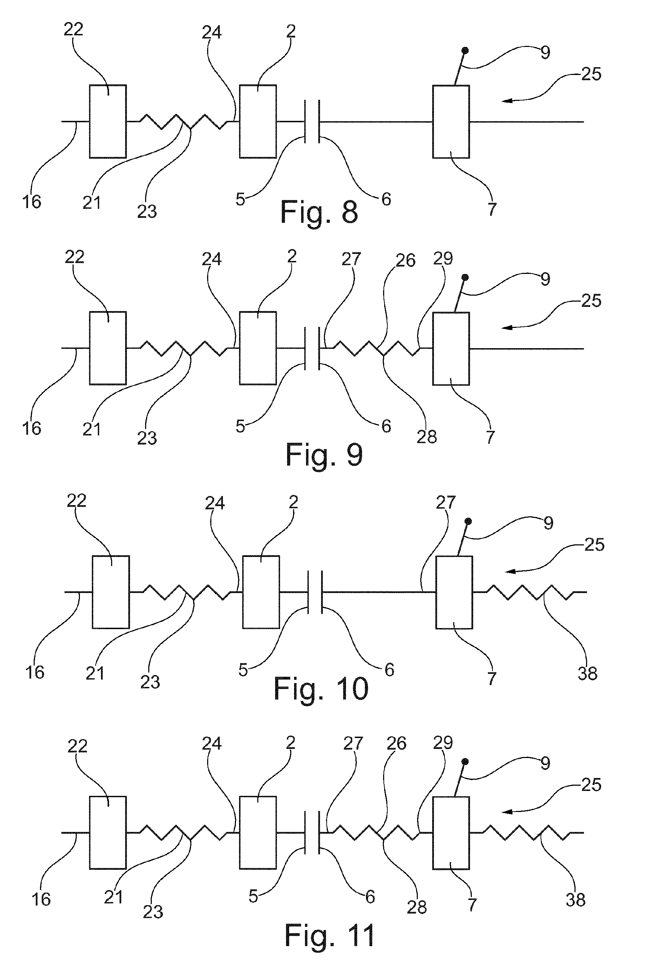

Fig. 8 zeigt die zweite Kupplungseinrichtung gemäß Fig. 5 und 6 in schematischer Darstellung. Ausgehend von dem Antriebsorgan 16 wird ein Drehmoment über die vierte Primärseite 22 auf die vierte Dämpferanordnung 21 mit vierter Dämpferelementanordnung 23 und auf die vierte Sekundärseite 24 übertragen. Die vierte Sekundärseite 24 ist mit dem Gehäuse 2 verbunden. Das Drehmoment wird bei geschlossener zweiter Kupplungseinrichtung 25 ausgehend von dem Gehäuse 2 über die erste Reibflächenanordnung 5 auf die zweite Reibflächenanordnung 6 übertragen. Ausgehend von der zweiten Reibflächenanordnung 6 wird das Drehmoment auf das Abtriebsorgan 7 übertragen. An das Abtriebsorgan 7 ist eine erste Dämpferelementanordnung 9 angebunden.

Fig. 9 zeigt eine zweite Ausführungsart der zweiten Kupplungseinrichtung 25. Im Unterschied zu der Ausführungsart gemäß Fig. 8 ist zwischen der zweiten Reibflächenanordnung 6 und dem Abtriebsorgan 7 eine fünfte Dämpferanordnung 26 mit fünfter Dämpferelementanordnung 28 angeordnet, wobei ein Drehmoment ausgehend von der zweiten Reibflächenanordnung 6 über eine fünfte Primärseite 27 und die fünfte Dämpferelementanordnung 28 auf eine fünfte Sekundärseite 29 übertragen wird.

Fig. 10 zeigt eine zweite Kupplungseinrichtung 25 gemäß einer dritten Ausführungsart. Im Unterschied zur Ausführungsart gemäß Fig. 8 ist hier eine zusätzliche weitere Dämpfungsanordnung 38 vorgesehen, die unmittelbar an das Abtriebsorgan 7 angebunden ist.

Fig. 11 zeigt eine vierte Ausführungsart der zweiten Kupplungseinrichtung 25, die im Unterschied zur zweiten Ausführungsart gemäß Fig. 9 eine weitere Dämpfungsanordnung 38 aufweist, wie in Bezug auf Fig. 10 beschrieben.

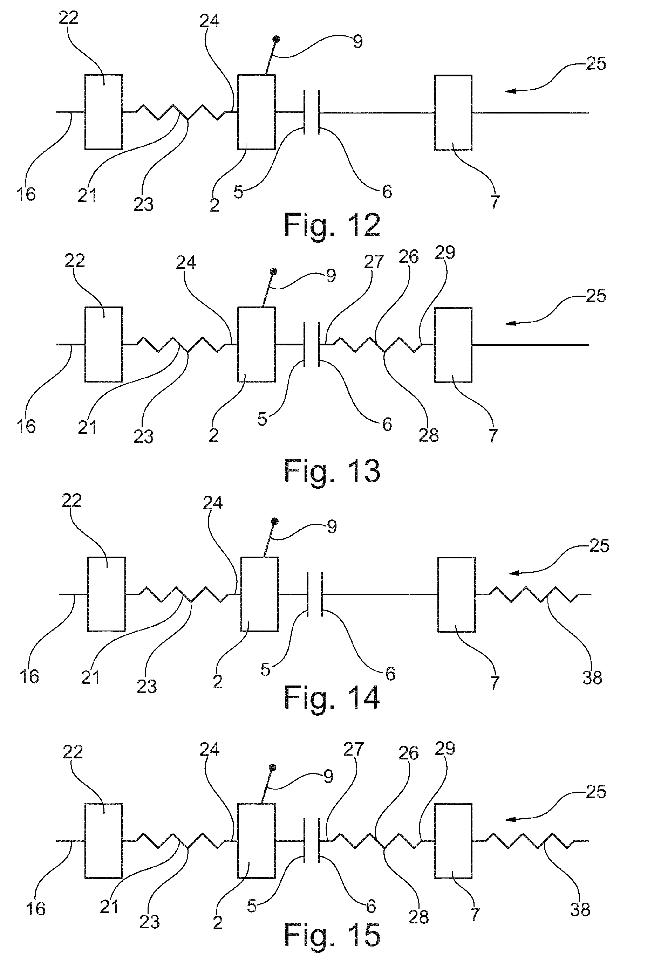

Fig. 12 zeigt eine fünfte Ausführungsart der zweiten Kupplungseinrichtung 25, wobei im Unterschied zu der ersten Ausführungsart gemäß Fig. 8, hier die erste Dämpferanordnung 9 nicht an das Abtriebsorgan 7, sondern an das Gehäuse 2 angebunden ist. Die Anbindung kann so erfolgen, dass die erste Dämpferanordnung 9 innerhalb oder außerhalb des Gehäuses 2 angeordnet ist.

Fig. 13 zeigt eine sechste Ausführungsart der zweiten Kupplungseinrichtung 25. Diese unterscheidet sich von der fünften Ausführungsform gemäß Fig. 12 dadurch, dass hier eine sechste Dämpferanordnung 26 zwischen der zweiten Reibflächenanordnung 6 und der Abtriebsseite 7 angeordnet ist. Ausgehend von der zweiten Reibflächenanordnung 6 wird entsprechend ein Drehmoment über die fünfte Primärseite 27 und die fünfte Dämpferelementanordnung 28 auf eine fünfte Sekundärseite 29 übertragen und von dort auf das Abtriebsorgan 7.

Fig. 14 zeigt eine siebte Ausführungsart der zweiten Kupplungseinrichtung, wobei im Unterschied zur fünften Ausführungsform gemäß Fig. 12 eine weitere Dämpferanordnung 28 vorgesehen ist, die an das Abtriebsorgan 7 angebunden ist.

Fig. 15 zeigt eine achte Ausführungsart der zweiten Kupplungseinrichtung, wobei im Unterschied zur sechsten Ausführungsform gemäß Fig. 13 eine weitere Dämpferanordnung 38 vorgesehen ist, die unmittelbar mit dem Abtriebsorgan 7 verbunden ist.

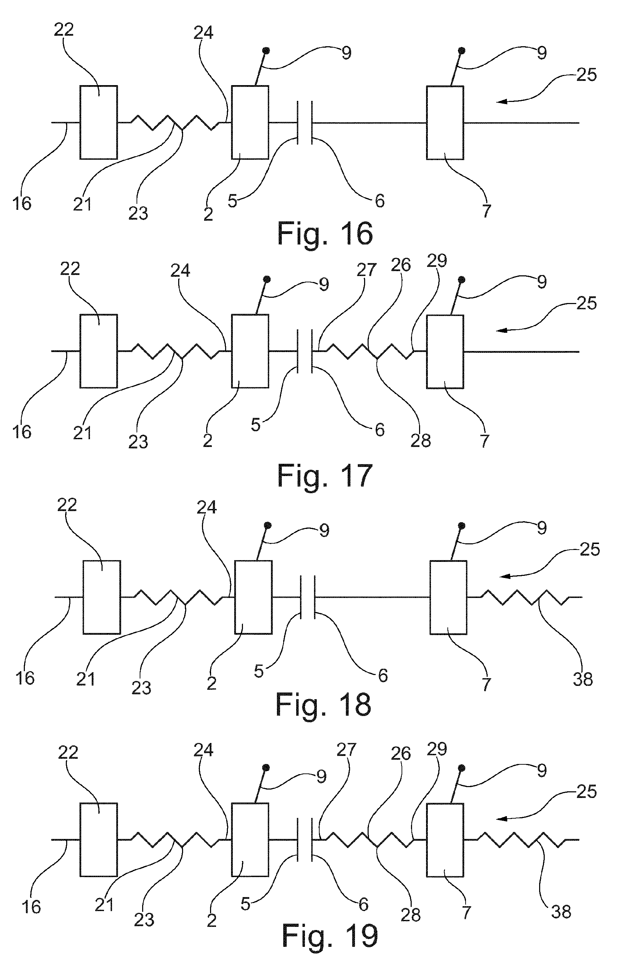

Fig. 16 zeigt eine neunte Ausführungsart der zweiten Kupplungseinrichtung, wobei im Unterschied zur Ausführungsart gemäß Fig. 8 hier eine zusätzliche erste Dämpferanordnung 9 mit dem Gehäuse 2 verbunden ist.

Fig. 17 zeigt eine zehnte Ausführungsart der zweiten Kupplungseinrichtung 25, wobei im Unterscheid zur zweiten Ausführungsart gemäß Fig. 9 hier eine zusätzliche erste Dämpferanordnung 9 an dem Gehäuse 2 angebunden ist.

Fig. 18 zeigt eine elfte Ausführungsart der zweiten Kupplungseinrichtung 25, wobei im Unterschied zur dritten Ausführungsart gemäß Fig. 10 auch hier eine weitere erste Dämpferelementanordnung 9 unmittelbar an das Gehäuse 2 angebunden ist.

Fig. 19 zeigt ebenfalls eine zwölfte Ausführungsart der zweiten Kupplungseinrichtung 25, wobei im Unterschied zur vierten Ausführungsart gemäß Fig. 11 hier ebenfalls eine weitere erste Dämpfungsanordnung 9 unmittelbar an das Gehäuse 2 angebunden ist.

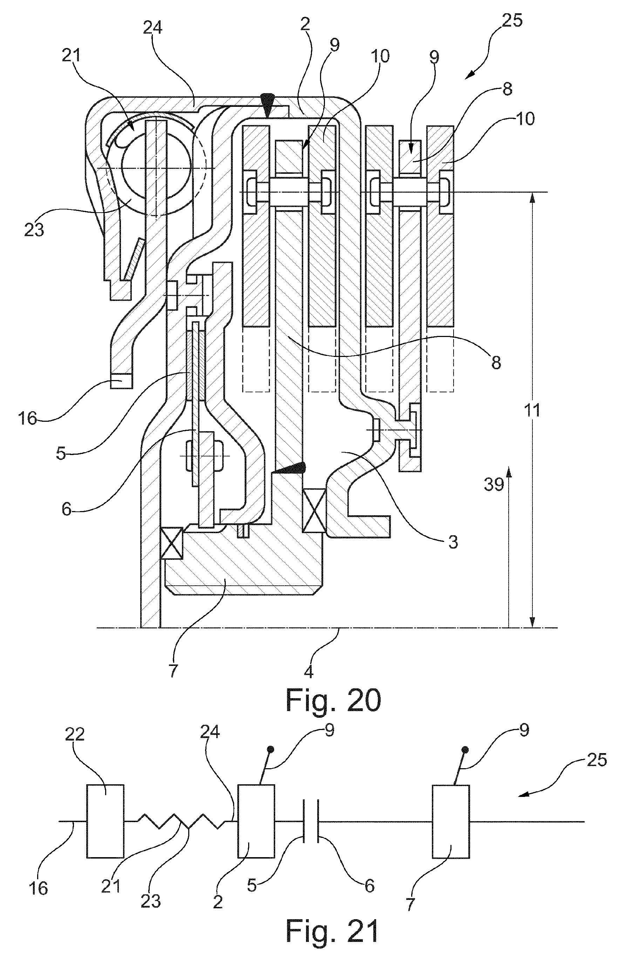

Fig. 20 zeigt eine zweite Kupplungseinrichtung 25 in einer Seitenansicht im Schnitt, die der schematischen Darstellung der neunten Ausführungsart der zweiten Kupplungseinrichtung 25 gemäß Fig. 16 entspricht. Gezeigt ist hier lediglich die obere Hälfte der zweiten Kupplungseinrichtung 25 oberhalb der Drehachse 4. Zusätzlich zu den Komponenten der zweiten Kupplungseinrichtung 25 gemäß Fig. 6 ist hier eine weitere erste Dämpferanordnung 9 vorgesehen, die jedoch unmittelbar mit dem Gehäuse 2 verbunden ist. Diese mit dem Gehäuse 2 verbundene erste Dämpferanordnung 9 ist außerhalb des Gehäuses 2 der Kupplungseinrichtung 25 angeordnet, wobei sich Auslenkungsmassen 10 außerhalb des Gehäuses 2 parallel zu der radialen Richtung 39 entlang des Ausgleichsmassenträgers 8 bewegen können.

Fig. 21 zeigt erneut die schematische Funktion der zweiten Kupplungseinrichtung gemäß Fig. 20, die bereits in Fig. 16 erläutert wurde.

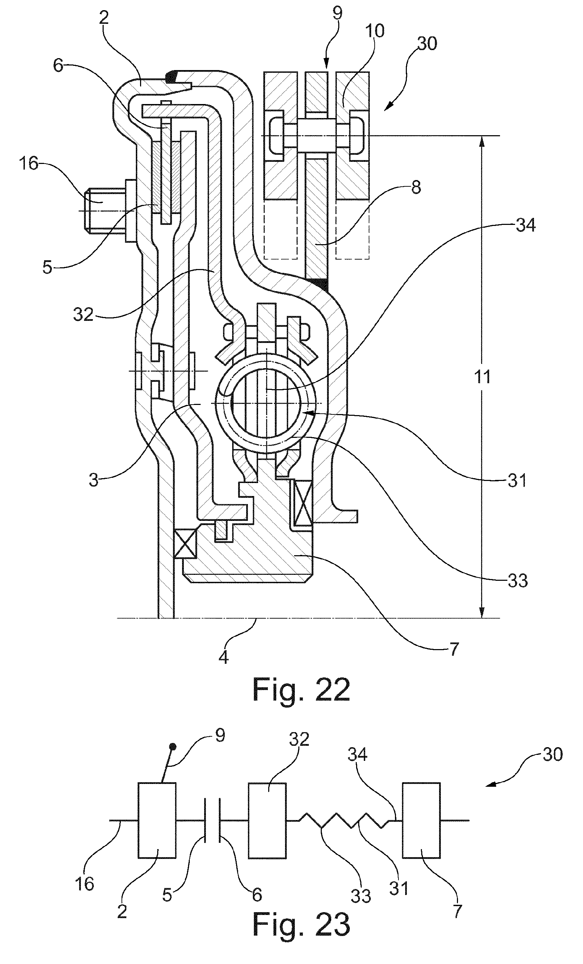

Fig. 22 zeigt eine dritte Kupplungseinrichtung 30 in einer Seitenansicht im Schnitt, wobei auch hier lediglich die obere Hälfte oberhalb der Drehachse 4 gezeigt ist. Über ein Antriebsorgan 16 wird ein Drehmoment auf das Gehäuse 2 der dritten Kupplungseinrichtung 30 übertragen. An eine Außenseite des Gehäuses 2 ist eine erste Dämpferanordnung 9 angebunden. Das Gehäuse 2 ist über eine erste Reibflächenanordnung 5 mit einer zweiten Reibflächenanordnung 6 verbunden, so dass Drehmomente von dem Gehäuse 2 auf eine fünfte Primärseite 32 einer fünften Dämpferanordnung 31 übertragen werden können. Die fünfte Primärseite 32 ist über eine fünfte Dämpferelementanordnung 33 mit der fünften Sekundärseite 34 gekoppelt. Die fünfte Sekundärseite 34 ist mit dem Abtriebsorgan 7 gekoppelt.

Fig. 23 zeigt in schematischer Darstellung die dritte Kupplungseinrichtung 30 gemäß Fig. 22. Ein Drehmoment wird ausgehend von dem Antriebsorgan 16 über das Gehäuse 2 auf eine erste Reibflächenanordnung 5 übertragen. Mit dem Gehäuse 2 ist eine erste Dämpferanordnung 9 verbunden. Das Drehmoment wird bei geschlossener dritten Kupplungseinrichtung 30 auf eine zweite Reibflächenanordnung 6 übertragen und von dort aus über eine fünfte Primärseite 32 und eine fünfte Dämpferelementanordnung 33 einer fünften Dämpferanordnung 31 auf eine fünfte Sekundärseite 34. Die fünfte Sekundärseite 34 ist mit dem Abtriebsorgan 7 verbunden.

Insbesondere die erste Dämpferanordnung kann mit dem Gehäuse 2 oder weiteren Komponenten, insbesondere über den Ausgleichsmassenträger 8 durch eine Schweiß-/ Löt-/ Klebverbindung, Schraubverbindung oder Nietverbindung verbunden sein.

In Bezug auf die erste Dämpferanordnung 9 in den Fig. 2 bis 23 wird ausgeführt, dass im Ausgleichsmassenträger 8 Langlöcher für Bolzen vorgesehen sind, die die Auslenkungsmassen 10 an den Ausgleichsmassenträger 8 binden. Durch eine spezielle Form der Löcher wird es den Auslenkungsmassen 10 ermöglicht, eine radiale Lage 11 bezüglich der Drehachse 4 zu verändern. Beispielsweise können die Löcher bei Draufsicht auf den Ausgleichsmassenträger 8 in Richtung der Drehachse 4 in bekannter Weise nierenförmig geformt sein, mit einer äußeren, nach innen gekrümmten Laufbahn für die Auslenkungsmassen 10. Bei einer konstanten Drehgeschwindigkeit befinden sich die Auslenkungsmassen 10 aufgrund der Fliehkraft an dem Punkt der Laufbahn, der radial am weitesten von der Drehachse 4 entfernt ist. Treten Drehschwingungen auf, d.h. verändert sich die Drehgeschwindigkeit periodisch, werden die Auslenkungsmassen 10 durch ihre Trägheit bezüglich des Ausgleichsmassenträgers 8 verzögert oder beschleunigt. Dabei wandern sie an der Laufbahn entlang radial nach innen und gewinnen potentielle Energie. Der so entstehende Oszillator ist in der Lage, Drehschwingungen zu dämpfen.

### Bezugszeichenliste

- 1: erste Kupplungseinrichtung
- 2: Gehäuse
- 3: Flüssigkeit
- 4: Drehachse
- 5: erste Reibflächenanordnung
- 6: zweite Reibflächenanordnung
- 7: Abtriebsorgan
- 8: Ausgleichsmassenträger
- 9: erste Dämpferanordnung
- 10: Auslenkungsmasse
- 11: Lage
- 12: zweite Dämpferanordnung
- 13: zweite Primärseite
- 14: zweite Dämpferelementanordnung
- 15: zweite Sekundärseite
- 16: Antriebsorgan
- 17: dritte Dämpferanordnung
- 18: dritte Primärseite
- 19: dritten Dämpferelementanordnung
- 20: dritte Sekundärseite
- 21: vierte Dämpferanordnung
- 22: vierte Primärseite
- 23: vierte Dämpferelementanordnung
- 24: vierte Sekundärseite
- 25: zweite Kupplungseinrichtung
- 26: fünfte Dämpferanordnung
- 27: fünfte Primärseite
- 28: fünften Dämpferelementanordnung
- 29: fünfte Sekundärseite
- 30: dritte Kupplungseinrichtung
- 31: fünfte Dämpferanordnung
- 32: fünfte Primärseite
- 33: fünfte Dämpferelementanordnung
- 34: fünfte Sekundärseite
- 35: Ausrückvorrichtung
- 36: Pedal
- 37: Kraftfahrzeug
- 38: weitere Dämpfungsanordnung
- 39: radiale Richtung

## Patentansprüche

1. Nasslaufende erste Kupplungseinrichtung (1) mit einem Gehäuse (2) zur Aufnahme einer Flüssigkeit (3), wobei das Gehäuse (2) mit einem Antriebsorgan (16) verbunden ist, zumindest umfassend:
• eine mit dem Gehäuse (2) zur Drehung um eine Drehachse (4) gekoppelte erste Reibflächenanordnung (5),
• eine mit der ersten Reibflächenanordnung (5) in Reibeingriff bringbare zweite Reibflächenanordnung (6), die mit einem Abtriebsorgan (7) zur Drehung um die Drehachse (4) gekoppelt ist,
• einen um die Drehachse (4) drehbaren Ausgleichsmassenträger (8) als erste Dämpferanordnung (9), der wenigstens eine Auslenkungsmasse (10) derart trägt, dass eine radiale Lage (11) der wenigstens einen Auslenkungsmasse (10) bezüglich der Drehachse (4) veränderbar ist,
wobei
das Gehäuse (2) über eine zweite Dämpferanordnung (12) mit der ersten Reibflächenanordnung (5) gekoppelt ist, wobei die zweite Dämpferanordnung (12) eine mit dem Gehäuse (2) verbundene zweite Primärseite (13) aufweist und eine gegen die Wirkung einer zweiten Dämpferelementanordnung (14) bezüglich der zweiten Primärseite (13) um die Drehachse (4) drehbare und mit der ersten Reibflächenanordnung (6) verbundene zweite Sekundärseite (15) aufweist.

2. Erste Kupplungseinrichtung (1) nach Anspruch 1, wobei die erste Dämpferanordnung (9) an das Abtriebsorgan (7) gekoppelt ist.

3. Erste Kupplungseinrichtung (1) nach Anspruch 1, wobei die zweite Reibflächenanordnung (6) über eine dritte Dämpferanordnung (17) mit dem Abtriebsorgan (7) gekoppelt ist, wobei die dritte Dämpferanordnung (17) eine mit der zweiten Reibflächenanordnung (6) verbundene dritte Primärseite (18) aufweist und eine gegen die Wirkung einer dritten Dämpferelementanordnung (19) bezüglich der dritten Primärseite (13) um die Drehachse (4) drehbare und mit dem Abtriebsorgan (7) gekoppelte dritte Sekundärseite (20) aufweist.

4. Erste Kupplungseinrichtung (1) nach Anspruch 3, wobei die erste Dämpferanordnung (9) an die dritte Primärseite (18) der dritten Dämpferanordnung (17) oder an das Abtriebsorgan (7) gekoppelt ist.

5. Nasslaufende zweite Kupplungseinrichtung (25) mit einem Gehäuse (2) zur Aufnahme einer Flüssigkeit (3), wobei das Gehäuse (2) mit einem Antriebsorgan (16) gekoppelt ist, zumindest umfassend:
• eine mit dem Gehäuse (2) zur Drehung um eine Drehachse (4) verbundene erste Reibflächenanordnung (5),
• eine mit der ersten Reibflächenanordnung (5) in Reibeingriff bringbare zweite Reibflächenanordnung (6), die mit einem Abtriebsorgan (7) zur Drehung um die Drehachse (4) gekoppelt ist,
• mindestens einen um die Drehachse (4) drehbaren Ausgleichsmassenträger (8) als erste Dämpferanordnung (9), der wenigstens eine Auslenkungsmasse (10) derart trägt, dass eine radiale Lage (11) der wenigstens einen Auslenkungsmasse (10) bezüglich der Drehachse (4) veränderbar ist,
wobei
das Gehäuse (2) über eine vierte Dämpferanordnung (21) mit dem Antriebsorgan (16) gekoppelt ist, wobei die vierte Dämpferanordnung (21) eine mit dem Antriebsorgan (16) verbundene vierte Primärseite (22) aufweist und eine gegen die Wirkung einer vierten Dämpferelementanordnung (23) bezüglich der vierten Primärseite (22) um die Drehachse (4) drehbare und mit dem Gehäuse (2) verbundene vierte Sekundärseite (24) aufweist.

6. Zweite Kupplungseinrichtung (25) nach Anspruch 5, wobei ein Ausgleichsmassenträger (8) an das Abtriebsorgan (7) oder an das Gehäuse (2) gekoppelt ist oder wobei zwei Ausgleichsmassenträger (8) vorgesehen sind, von denen einer an das Abtriebsorgan (7) und der andere an das Gehäuse (2) gekoppelt ist.

7. Zweite Kupplungseinrichtung (25) nach Anspruch 5 oder 6, wobei eine fünfte Dämpferanordnung (26) mit dem Abtriebsorgan (7) verbunden ist, wobei die fünfte Dämpferanordnung (26) eine mit der zweiten Reibflächenanordnung (6) verbundene fünfte Primärseite (27) aufweist und eine gegen die Wirkung einer fünften Dämpferelementanordnung (28) bezüglich der fünften Primärseite (27) um die Drehachse (4) drehbare und mit dem Abtriebsorgan (7) verbundene fünfte Sekundärseite (29) aufweist.

8. Nasslaufende dritte Kupplungseinrichtung (30) mit einem Gehäuse (2) zur Aufnahme einer Flüssigkeit (3), wobei das Gehäuse (2) mit einem Antriebsorgan (16) gekoppelt ist, zumindest umfassend:
• eine mit dem Gehäuse (2) zur Drehung um eine Drehachse (4) verbundene erste Reibflächenanordnung (5),
• eine mit der ersten Reibflächenanordnung (5) in Reibeingriff bringbare zweite Reibflächenanordnung (6), die mit einem Abtriebsorgan (7) zur Drehung um die Drehachse (4) gekoppelt ist,
• mindestens einen um die Drehachse (4) drehbaren Ausgleichsmassenträger (8) als erste Dämpferanordnung (9), der wenigstens eine Auslenkungsmasse (10) derart trägt, dass eine radiale Lage (11) der wenigstens einen Auslenkungsmasse (10) bezüglich der Drehachse (4) veränderbar ist,
wobei
die zweite Reibflächenanordnung (6) über eine fünfte Dämpferanordnung (31) mit dem Abtriebsorgan (7) gekoppelt ist, wobei die fünfte Dämpferanordnung (31) eine mit der zweiten Reibflächenanordnung (6) verbundene fünfte Primärseite (32) aufweist und eine gegen die Wirkung einer fünften Dämpferelementanordnung (33) bezüglich der fünften Primärseite (32) um die Drehachse (4) drehbare und mit dem Abtriebsorgan (7) verbundene fünfte Sekundärseite (34) aufweist und wobei die erste Dämpferanordnung (9) an das Gehäuse (2) gekoppelt ist.

9. Erste, zweite oder dritte Kupplungseinrichtung (1, 25, 30) nach einem der vorhergehenden Ansprüche, wobei zumindest ein Ausgleichsmassenträger (8) außerhalb des Gehäuses (2) angeordnet ist.

10. Kraftfahrzeug (37) mit zumindest einem Antriebsorgan (16) und einem Abtriebsorgan (7) sowie einer dazwischen angeordneten Kupplungseinrichtung (1, 25, 30) nach einem der vorhergehenden Ansprüche.
